# EUROPEAN PATENT SPECIFICATION

(11) **EP 3 859 813 B1**
(45) Date of publication and mention of the grant of the patent: **25.02.2026**
(21) Application number: 19867764.3
(22) Date of filing: 09.09.2019
(51) Int. Cl.: H01M 50/202, H01M 50/222, H01M 50/227, H01M 50/229, H01M 50/238, H01M 50/262, H01M 10/0525, H01M 50/10, H01M 50/213, H01M 50/293

(54) **SHEET-COVERED BATTERY AND BATTERY PACK**
BESCHICHTETE BATTERIE UND BATTERIEPACK
BATTERIE RECOUVERTE D'UNE FEUILLE ET BLOC-BATTERIE

(30) Priority: 26.09.2018 JP 2018180030
(43) Date of publication of application: 04.08.2021
(73) Proprietor: DKS Co. Ltd., Kyoto-shi, Kyoto 600-8873 (JP)
(72) Inventor: NISHIKAWA, Akiyoshi, kyoto-shi, Kyoto 600-8873 (JP); HIGASHIZAKI, Tetsuya, kyoto-shi, Kyoto 600-8873 (JP); ISHINO, Mana, kyoto-shi, Kyoto 600-8873 (JP); TAKEKAWA, Tadashi, kyoto-shi, Kyoto 600-8873 (JP); AKAO, Toshikazu, kyoto-shi, Kyoto 600-8873 (JP)
(74) Representative: TBK
(86) International application number: PCT/JP2019/035336
(87) International publication number: WO 2020/066565

(56) References cited:
- WO-A1-2019/150932
- JP-A- 2003 031 187
- JP-A- 2008 235 255
- JP-A- 2009 094 110
- JP-A- 2009 211 908
- JP-A- 2009 211 908
- JP-A- H07 216 748
- KR-A- 20100 071 634
- KR-A- 20170 046 330
- US-A- 5 316 834
- US-A1- 2004 149 375

## Description

### Technical Field

The present invention relates to a sheet-covered battery which can be used for arranging a plurality of batteries, and a battery pack using the battery cover sheet.

### Background Art

Lithium-ion batteries, which have advantages of, for example, being rechargeable secondary batteries, being small and lightweight, and having high storage capacity per unit volume or unit weight, have been widely used as, for example, power sources of mobile electronic devices. Furthermore, in these years, storage batteries have come to be increasingly common in, for example, electric apparatuses having higher power consumption than mobile electronic devices, such as motorized wheelchairs, electric light vehicles, or electric cars, or in residential use (household use); in these applications, lithium-ion batteries are used.

Under such circumstances, as means for keeping up with higher power consumption, battery packs in which a plurality of batteries are combined together are known. In such a battery pack, in order to arrange a plurality of batteries in parallel, for example, a battery holder having a plurality of recesses or a plurality of spaces corresponding to the outer peripheral shape of the batteries has been used. With such a battery holder, adjacent batteries can be held in arrangement at increased intervals, to thereby suppress thermal propagation (phenomenon in which heat generated in a battery propagates to another battery) in the batteries.

In addition to the battery pack using such a battery holder, there is another known battery pack in which gaps among a plurality of batteries are filled with a potting material (potting resin). For example, Patent Literature 1 discloses a battery pack in which a plurality of cylindrical batteries are arranged and gaps among these batteries are filled with potting-resin portions.

With the above-described battery holder, adjacent batteries can be arranged at increased intervals; however, this causes, as the whole battery pack, a decrease in the number of batteries housed per unit volume, resulting in a decrease in energy density. In the battery pack disclosed in Patent Literature 1, instead of the battery holder, potting resin portions are formed by filling with a potting material, so that the batteries are more closely packed at intervals of 1.0 mm or less to thereby avoid the decrease in energy density. In addition, the potting resin portions conform to and are in contact with the outer peripheral surfaces of the batteries, so that heat generated in the batteries dissipates throughout the potting resin portions, to thereby suppress thermal propagation.

### Citation List

### Patent Literature

PTL 1: Japanese Unexamined Patent Application Publication No. 2012-028244

JP 2003-031187 A relates to a compact secondary cell and a cell pack, wherein an endothermic agent composed of a compound capable of conducting endothermic reaction is added to an envelope film or an enveloping pack material of the secondary cell and the cell pack, in order to restrain an abnormal reaction of the cell.

JP 2009- 094110 A relates to a heat dissipating sheet member containing resin and inorganic powder exhibiting anisotropy, the inorganic particles exhibiting anisotropy are directed in the thickness direction of the sheet, and the peak ratio (<002>/<100>) of the <002> plane to the <100> plane of an X-ray diffraction pattern obtained by radiating X-rays to the thickness direction of the sheet of a heat dissipating sheet member at an angle of 90° for the length direction of the sheet is ≤10, wherein the inorganic powder exhibiting anisotropy is one or more selected from a group consisting of boron, graphite, and metal powder processed into the shape of scale or plate.

JP 2009-211908 A relates to a battery including at least an insulating outer package tube, wherein the insulating outer package tube includes an opening at both ends and includes a recess and a projection at least on the outer circumferential face, and the projection and the recess are provided in continuation in the insulating outer package tube.

JP H07-216748 A relates to a heat resistant sheet obtained by forming a heat-resistant coated layer containing a fluorine-containing resin having a melting point of 300°C or below and a heat-resistant inorganic material at a weight ratio of (20/100)-(80/0) in a base fabric containing an inorganic fiber and a heat-resistant organic synthetic fiber having >=300°C melting point or heat decomposition point at a weight ratio of (10/90) to (90/10) by impregnation or coating.

US 5 316 834 A relates to a fiber-reinforced thermoplastic sheet comprising at least one first layer formed by impregnating a woven or knitted fabric of continuous carbon fibers with a matrix resin of a thermoplastic resin and at least one second layer formed by impregnating a fiber structure material of a heat-resistant fiber with a matrix resin of a thermoplastic resin, the above first layer(s) and the second layer(s) being laminated integrally, the second layer having the heat-resistant fibers substantially uniformly distributed in the matrix resin in the cross section of the sheet and substantially having no voids of which the diameter exceeds the fiber diameter of the heat-resistant fibers, the fiber structure material, used in the second layer, having a fiberentangling strength of at least 1.0 kg/mm² in any directions crossing at right angles; and a process for the production thereof.

US 2004/149375 A1 relates to a method for encapsulating a secondary battery, wherein the method first impregnates a fiber fabric with a resin composition, and then a first heating process is performed to form an adhesive sheet, a jelly-roll of a battery is encapsulated with the adhesive sheet, and then a second heating process is performed to cure the adhesive sheet completely.

### Summary of Invention

### Technical Problem

In general, a potting material is used to produce a battery pack by arranging a plurality of batteries to form a module, placing the module into, for example, a mold, and, into the mold or the like, injecting and curing a liquid potting material. Thus, during filling with the potting material, the following problems during filling occur: for example, it is difficult to control the potting material so as to have a uniform thickness to fill the gaps between the batteries; it is also not easy to achieve filling with the potting material without entry of bubbles; and the potting material flows even into non-target regions for filling. These problems during filling may affect the quality of the resultant battery packs.

In addition, during curing of the potting material, the following problems during curing also occur: in order to cure the liquid potting material, heating is necessary; and in order to cure the potting material, a predetermined curing time is necessary. These problems during curing may affect, for example, the production costs or production efficiency of battery packs. In addition, in the resultant battery packs, since the gaps among the batteries are filled with the cured potting material, it is not easy to inspect the battery packs, which is also problematic.

The present invention has been made in order to address such problems; an object is to efficiently produce a high-quality battery pack without using any potting material.

### Solution to Problem

In order to achieve the above-described object, a battery cover sheet used in a sheet-covered battery or in a battery pack according to the present invention (hereinafter also simply referred to as battery cover sheet according to the present invention) has a configuration of being a sheet member formed of a resin composition containing urethane resin as a resin component and an inorganic filler, and having a storage modulus at 25°C in a range of 0.1 to 50 MPa so as to have flexibility enough to cover, along a shape of an outer surface of a battery, at least partially the outer surface, wherein the resin composition contains, relative to 100 mass% of a total amount of the resin composition, the inorganic filler in a range of 30 to 95 mass%, wherein the inorganic filler is at least one selected from the group consisting of divalent or trivalent metal hydroxide, divalent metal sulfate hydrate, zinc salt of oxoacid, silica, alumina, dawsonite, and sodium hydrogen carbonate, and wherein the sheet member has a thickness in a range of 0.5 to 3.0 mm.

In the case of this configuration, the battery cover sheet that is a sheet member at least formed of a resin composition containing an inorganic filler and having flexibility can be used just to cover the outer surface of a battery, to thereby easily produce a battery holder that houses the battery. In addition, a plurality of batteries covered with the battery cover sheet (sheet-covered batteries) can be just arranged and combined together to thereby easily produce a battery pack. The battery cover sheet contains the inorganic filler, to thereby suitably dissipate heat from the batteries. Thus, compared with the case of filling with a liquid potting material, increase in the production efficiency can be achieved.

In addition, in the case of the above-described configuration, since the necessity of use of a liquid potting material has been eliminated, it is no longer necessary to take measure for preventing entry of bubbles into the potting material or flowing of the potting material into non-target regions. Furthermore, curing of a liquid potting material is no longer performed, which eliminates the necessity of equipment such as a mold or heating means (or mixing means when the potting material is of a twocomponent mixing type), and also eliminates the necessity of curing time. Thus, in addition to increase in the production efficiency of the battery pack, suppression of the increase in the production costs can be achieved.

Furthermore, in the case of the above-described configuration, the battery cover sheet can be provided to have a uniform thickness, so that, compared with the case of filling with a liquid potting material, batteries can be arranged at more precise intervals. In addition, the battery cover sheet has flexibility, and hence can be used to easily cover, along the shape of the outer surfaces of batteries, the outer surfaces of the batteries. Thus, for any type of batteries, a battery holder and a battery pack can be easily produced.

Moreover, in the case of the above-described configuration, a plurality of batteries covered with the battery cover sheet can be just combined together to provide a battery pack, so that, in the battery pack, the batteries can be arranged in parallel with the battery cover sheet therebetween, substantially without gaps. Thus, as in the potting material, heat from the batteries can be dissipated to the adjacent battery cover sheet. Furthermore, a single battery cover sheet can be used to cover a plurality of batteries, so that the single battery cover sheet can be used to prevent propagation of heat from a battery to another battery and to dissipate the heat.

In addition, in the case of the above-described configuration, a battery pack is provided by just combining together and arranging a plurality of batteries covered with the battery cover sheet, so that the resultant battery pack can be inspected by just examining the appearance. In addition, the battery cover sheet is used to just cover the batteries, so that, during production of the battery pack, the arrangement or combination form of the batteries can be adjusted in accordance with, for example, the shape of the package of the battery pack. This can provide, during production of the battery pack, improved universal usability, applicability, or design.

The above-described battery cover sheet having the configuration has a configuration in which the resin composition contains, relative to 100 mass% of a total amount of the resin composition, the inorganic filler in a range of 30 to 95 mass%.

The above-described battery cover sheet having the configuration has a configuration in which the sheet member has a thickness in a range of 0.5 to 3.0 mm.

The above-described battery cover sheet having the configuration has a configuration in which the resin composition contains urethane resin as a resin component.

The above-described battery cover sheet having the configuration has a configuration in which the inorganic filler is at least one selected from the group consisting of divalent or trivalent metal hydroxide, divalent metal sulfate hydrate, zinc salt of oxoacid, silica, alumina, dawsonite, and sodium hydrogen carbonate.

The above-described battery cover sheet having the configuration may have a configuration in which the sheet member further includes a fibrous substrate.

The above-described battery cover sheet having the configuration may have a configuration in which a fiber forming the fibrous substrate is at least one fiber selected from the group consisting of glass fiber, polyester fiber, carbon fiber, boron fiber, aramid fiber, nylon fiber, polyethylene fiber, polyarylate fiber, BPO fiber, polyphenylene sulfide fiber, polyimide fiber, and fluorofiber.

The above-described battery cover sheet having the configuration may have a configuration in which the fibrous substrate is formed of braid, woven fabric, knitted fabric, nonwoven fabric, monofilaments, or rovings.

The above-described battery cover sheet having the configuration may have a configuration in which the sheet member has a fiber volume fraction Vf in a range of 0.5 to 50%.

A battery pack according to the present invention at least includes a structure in which outer surfaces of a plurality of batteries are at least partially covered with the above-described battery cover sheet having the configuration or a structure in which a plurality of the above-described sheet-covered batteries are combined together.

The above-described battery pack having such a configuration may have a configuration in which the battery cover sheet is fixed so as to cover, of the outer surface of the battery except for end surfaces, a whole peripheral surface.

### Advantageous Effects of Invention

In the present invention, the above-described configurations provide advantages of efficient production of a high-quality battery pack without using any potting material.

### Brief Description of Drawings

[Fig. 1] Fig. 1(A) is a schematic perspective view illustrating a typical example of a process of covering the outer surface of a battery with a battery cover sheet according to the present invention to produce a sheet-covered battery; Fig. 1(B) is a schematic top view illustrating an example of the configuration of the sheet-covered battery in Fig. 1(A) when viewed from above; and
Fig. 1(C) is a schematic top view illustrating another example of the configuration of the sheet-covered battery.
[Fig. 2] Fig. 2 illustrates the relationship between a schematic sectional view and a schematic top view illustrating an example of the sheet-covered batteries in Figs. 1(A) and 1(B).
[Fig. 3] Figs. 3(A) and 3(B) are schematic top views illustrating examples of a minimum unit for providing a battery pack by combining together such sheet-covered batteries as in Fig. 2.
[Fig. 4] Fig. 4(A) is a schematic plan view illustrating another example of the configuration of the sheet-covered battery using a battery cover sheet according to the present invention, and Fig. 4(B) is a schematic perspective view illustrating another example of the configuration of the sheet-covered battery using a battery cover sheet according to the present invention.
[Fig. 5] Fig. 5 is a schematic side view illustrating another example of a battery pack provided by combining together a plurality of batteries using a battery cover sheet according to the present invention.

### Description of Embodiments

Hereinafter, typical embodiments of the present invention will be described with reference to drawings. Incidentally, in the following description, like or similar elements in all the drawings are denoted by the same reference signs, and will not be repeatedly described.

### (Embodiment 1)

### [Battery cover sheet and sheet-covered battery]

The battery cover sheet according to the present disclosure at least has a configuration of being a sheet member formed of a resin composition containing an inorganic filler, and having flexibility enough to cover, along the shape of the outer surface of a battery, at least partially the outer surface.

In the present disclosure, the specific type of the battery to be covered is not particularly limited, and publicly known various batteries can be employed. Specific examples include secondary batteries such as lithium-ion batteries, nickel-cadmium batteries, and nickel-hydrogen batteries. Of these, lithium-ion batteries are particularly preferred. In addition, the shape of the battery to be covered is also not particularly limited, and examples include tall shapes such as a cylindrical shape (a cylindrical-column shape), a laminate shape (a flat-plate shape), a prismatic shape (a quadrangular-prism shape or a rectangular-parallelepiped shape), and other pillar shapes (refer to Embodiment 2 described later).

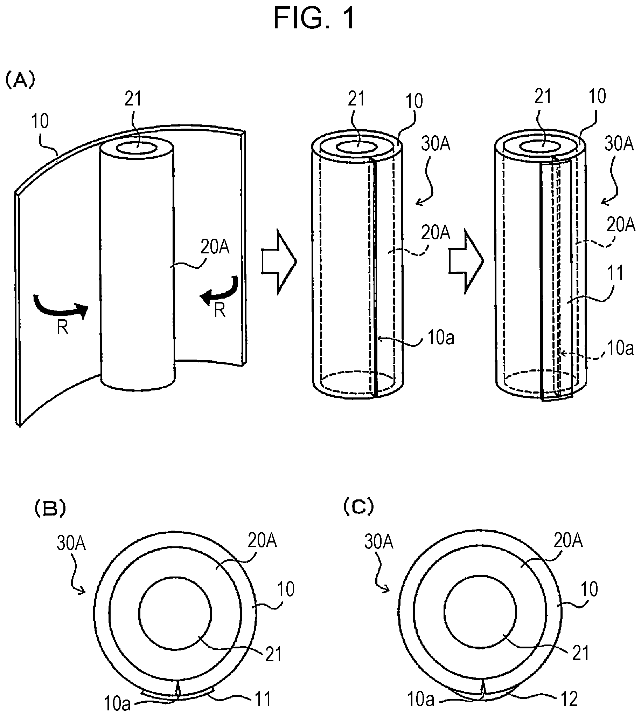

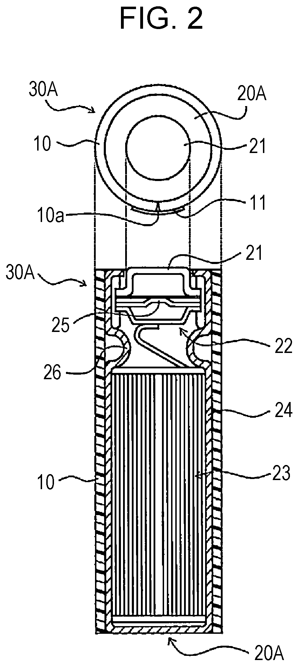

In this Embodiment 1, as illustrated in Fig. 1(A) and Fig. 2, the present disclosure will be described with reference to an example case where a cylindrical lithium-ion battery 20A is covered with a battery cover sheet 10. Incidentally, for convenience of explanation, such a battery covered with the battery cover sheet 10 will be referred to as "a sheet-covered battery".

As schematically illustrated in Fig. 1(A), the battery cover sheet 10 has a size for covering, of the outer surface of the cylindrical lithium-ion battery 20A, for example, the whole outer peripheral surface (side surface) except for both end surfaces; such a battery cover sheet 10 is wound around the outer peripheral surface of the cylindrical lithium-ion battery 20A (for example, arrows R in the left drawing in Fig. 1(A)) to cover the outer peripheral surface (the middle drawing in Fig. 1(A)).

In such a case where the outer peripheral surface of the cylindrical lithium-ion battery 20A is covered with the battery cover sheet 10, for example, ends of the battery cover sheet 10 are butted together to form a seam 10a. This covering provided only by the battery cover sheet 10 cannot be maintained in this state and hence, for example, an adhesive tape 11 is affixed onto the seam 10a (the right drawing in Fig. 1(A)). As a result, the ends of the battery cover sheet 10 that are butted together are maintained in this state, to thereby form a sheet-covered battery 30A in which the cylindrical lithium-ion battery 20A is covered with the battery cover sheet 10.

As described above, the battery cover sheet 10 is at least formed of a resin composition containing an inorganic filler. The specific formula of this resin composition (and the inorganic filler) will be described later. The battery cover sheet 10 is at least a sheet member formed of a resin composition and, as described above, at least has flexibility enough to cover, along the shape of the outer surface of a battery, the outer surface.

For evaluation of the flexibility, the measurement values for evaluating the flexibility of the battery cover sheet 10 (resin composition) is the storage modulus at 25°C. In the present disclosure, the storage modulus (25°C) of the battery cover sheet 10 is in a range of 0.1 to 50 MPa.

Stated another way, in the present disclosure, since the battery cover sheet 10 (resin composition) has a storage modulus (25°C) in the range of 0.1 to 50 MPa, it has flexibility suitable as a sheet member for covering a battery. In particular, since the resin composition is a urethane resin composition that has a storage modulus in this range, the outer surface of a battery can be suitably covered.

The specific shape of the battery cover sheet 10 is not particularly limited as long as it has a shape, in accordance with the shape of the battery to be covered, for covering the outer surface of the battery. Ordinarily, the shape is rectangular (oblong) (refer to Fig. 1(A)). Since the battery cover sheet 10 is a sheet member formed of a resin composition, it can be appropriately cut so as to have a suitable size in accordance with the dimensions of the battery to be covered or the area of the region (of the battery) to be covered. Thus, the battery cover sheet 10 according to the present disclosure may be a sheet prepared by cutting in advance so as to have a size in accordance with the battery, or may be a large sheet that can be cut in accordance with conditions such as the type of or the cover area of the battery.

The thickness of the battery cover sheet 10 is in a range of 0.5 to 3.0 mm. The battery cover sheet 10 at least ensures, in the resultant battery pack, predetermined intervals between adjacent batteries (such as the cylindrical lithium-ion batteries 20A) in order to suppress thermal propagation such as thermal runaway propagation. Thus, the thickness of the battery cover sheet 10 can be appropriately set in accordance with the intervals between adjacent batteries (battery intervals).

The thickness of the battery cover sheet 10 is in a range of 0.5 to 3.0 mm. The upper limit may be 2.0 mm or less, or 1.5 mm or less. When the lower limit is 0.5 mm, in the sheet-covered batteries 30A disposed adjacent to each other, the minimum intervals (minimum battery intervals) between adjacent cylindrical lithium-ion batteries 20A can be set to about 1.0 mm. As a result, thermal propagation can be suitably suppressed. Alternatively, in a case where the minimum intervals are allowed to be less than 1.0 mm, it is apparent that the battery cover sheet 10 may be provided to have a thickness of less than 0.5 mm.

When the battery cover sheet 10 has a thickness of 3.0 mm or less, though it depends on various conditions such as the type of batteries or the specific configuration of the battery pack, the number of batteries housed per unit volume of the battery pack can be suitably set. This effectively suppresses the decrease in the energy density of the battery pack. However, depending on various conditions, it is apparent that, even with the battery cover sheet 10 that has a thickness of more than 3.0 mm, the decrease in the energy density of the battery pack may be avoided in some cases. In such a case, for example, primarily for suppression of thermal propagation, the thickness of the battery cover sheet 10 can be set. When the battery cover sheet 10 is such a sheet member having a uniform thickness, compared with the existing battery packs filled with liquid potting materials, batteries can be arranged at more precise intervals.

In the sheet-covered battery 30A, as illustrated in Fig. 1(B), in order to fix the seam 10a of the battery cover sheet 10 covering the outer peripheral surface of the cylindrical lithium-ion battery 20A, the adhesive tape 11 is used. The specific type of this adhesive tape 11 is not particularly limited as long as it achieves bonding at the seam 10a so as to maintain the covering provided by the battery cover sheet 10. The adhesive tape 11 preferably has heat resistance from the viewpoint of heat generated in the cylindrical lithium-ion battery 20A. The adhesive tape 11 is not limited to a publicly known imide tape (polyimide adhesive tape) used in EXAMPLES described later.

In the sheet-covered battery 30A, the fixing member for fixing the battery cover sheet 10 so as to cover the outer surface of the battery is not limited to the adhesive tape 11. For example, as schematically illustrated in Fig. 1(C), an adhesive 12 may be applied so as to fill the gap at the seam 10a of the battery cover sheet 10. The type of this adhesive 12 is also not particularly limited, and a publicly known adhesive (preferably having heat resistance) can be suitably used.

Incidentally, the fixing member such as the adhesive tape 11 or the adhesive 12 may not necessarily fix the seam 10a of the battery cover sheet 10. The battery cover sheet 10 is used to cover at least partially the outer surface of the battery and hence the battery cover sheet 10 covering the outer surface does not necessarily form the seam 10a. In this case, ends of the battery cover sheet 10 may be fixed on the outer surface of the battery using the fixing member, or the inner surface of the battery cover sheet 10, that is, the surface conforming to and being in contact with the outer surface of the battery may be partially fixed with the fixing member. In this case, the fixing member at least has heat resistance and insulating properties.

Fig. 2 includes a schematic sectional view of the sheet-covered battery 30A (the lower drawing in Fig. 2) and its corresponding top view (the upper drawing in Fig. 2). In the cylindrical lithium-ion battery 20A, in general, as also illustrated in the cylindrical lithium-ion batteries 20A in Fig. 1(A) to Fig. 1(C), a terminal cap 21 is exposed at the upper end of the cylindrical lithium-ion battery 20A. As illustrated in Fig. 2, in the upper portion of the cylindrical lithium-ion battery 20A, a sealing part 22 including the terminal cap 21 is disposed. In the lower portion of the cylindrical lithium-ion battery 20A, that is, under the sealing part 22, an electrode group 23 is disposed. The sealing part 22 and the electrode group 23 are enclosed (housed) within an outer packaging part 24.

The specific configuration of the sealing part 22 is not particularly limited, but, in the cylindrical lithium-ion battery 20A, typically includes, in addition to the terminal cap 21, a metal filter, a gasket, a metal valve part, and a gas release valve 25, for example. The gas release valve 25 is configured to release, to the outside, gas that is generated within the cylindrical lithium-ion battery 20A and that increases the internal pressure. In the schematic configuration in Fig. 2, the gas release valve 25 is disposed, as a component of the sealing part 22, under the terminal cap 21.

The electrode group 23 includes, for example, sheetshaped positive-electrode member and negative-electrode member, film-shaped separators, and current collectors. The positive-electrode member, the negative-electrode member, and the separators have a configuration in which the positive-electrode member and the negative-electrode member are individually sandwiched between the separators and stacked, and spirally wound. The positive-electrode member and the negative-electrode member are individually electrically connected to the current collectors. The outer packaging part 24 has a cylindrical shape having a bottom at the lower end and having an opening at the upper end, and is generally formed of metal. The outer packaging part 24 houses, in its lower portion, the electrode group 23; the negative-electrode-member current collector of the electrode group 23 is electrically connected to, for example, the bottom surface of the outer packaging part 24.

After the electrode group 23 is housed, an electrolytic solution is injected through the opening at the upper end of the outer packaging part 24; subsequently, the sealing part 22 is housed over the electrode group 23. At this time, the positive-electrode-member current collector of the electrode group 23 is electrically connected to the metal filter of the sealing part 22. In the cylindrical lithium-ion battery 20A, as schematically illustrated in Fig. 2, the outer packaging part 24 is processed so as to protrude in a framelike form from the inner peripheral surface of the outer packaging part 24, to thereby form a seat portion 26 for positioning the sealing part 22. To this seat portion 26, the sealing part 22 is fitted, to thereby seal (close) the opening at the upper end of the outer packaging part 24. Subsequently, the opening at the upper end of the outer packaging part 24 is closed such that the upper surface of the terminal cap 21 is exposed, so that the sealing part 22, the electrode group 23, and the electrolytic solution are sealed within the outer packaging part 24.

Incidentally, the internal configuration of the cylindrical lithium-ion battery 20A in Fig. 2 is a mere example, and the configuration of the cylindrical battery to be fitted with the battery cover sheet 10 according to the present disclosure is not limited thereto. Even when the battery does not have the cylindrical shape (for example, a laminate shape or a prismatic shape described later as examples in Embodiment 2), or the battery is of a type other than the lithium-ion battery, publicly known internal configurations can be employed.

The exterior (the outer peripheral surface of the outer packaging part 24) of the cylindrical lithium-ion battery 20A may be covered with a publicly known resin sheet (not shown). Furthermore, at the outer peripheral surface of the outer packaging part 24, in addition to the metal body, a resin cover layer (cover) may be disposed. Alternatively, though it depends on the internal configuration of the cylindrical lithium-ion battery 20A, the outer packaging part 24 itself may be formed of, instead of metal, resin. The battery cover sheet 10 according to the present disclosure is an article different from the resin sheet, the cover layer, and the outer packaging part 24 formed of resin that are optionally disposed at the outer peripheral surface of the cylindrical lithium-ion battery 20A, and is an article additionally fitted to the cylindrical lithium-ion battery 20A.

As has been described, the battery cover sheet 10 according to the present disclosure enables formation of a "battery holder" formed of a resin composition by just covering the outer peripheral surface of the cylindrical lithium-ion battery 20A with the battery cover sheet 10 and fixing the battery cover sheet 10. Such a plurality of sheet-covered batteries 30A covered with the battery cover sheet 10 can be just arranged and combined together to thereby produce a battery pack as described later. Thus, increase in the production efficiency can be achieved, compared with existing battery packs provided by filling with liquid potting materials.

When the cylindrical lithium-ion battery 20A is covered with the battery cover sheet 10, since the battery cover sheet 10 has flexibility, the battery cover sheet 10 can be disposed such that its inner peripheral surface conforms to and is in contact with the outer peripheral surface of the cylindrical lithium-ion battery 20A. The battery cover sheet 10 contains the inorganic filler, so that it suitably dissipates heat (achieves dissipation of heat) generated in the cylindrical lithium-ion battery 20A. Such a configuration in which the battery cover sheet 10 is disposed such that its inner peripheral surface suitably conforms to and is in contact with the outer peripheral surface of the cylindrical lithium-ion battery 20A, provides increased heat-dissipation efficiency.

### [Resin composition forming battery cover sheet]

The resin composition forming the battery cover sheet 10 according to the present disclosure at least contains a resin component and an inorganic filler. As the resin component, urethane resin is used.

Two or more urethane resins that are different in combinations of a polyisocyanate and a polyol can be used. Alternatively, two or more urethane resins of the same combination of a polyisocyanate and a polyol that are obtained under different synthesis conditions can be used.

In the battery cover sheet 10 according to the present disclosure, of the above-described resins, urethane resin is particularly preferably used as the resin component. As described above, the battery cover sheet 10 according to the present disclosure has flexibility enough to cover, along the outer surface of a battery, the outer surface; urethane resins can be produced so as to widely vary in flexibility. For example, urethane resins ranging from a soft urethane resin having a storage modulus at 25°C of 1 MPa or less to a very-hard urethane resin having a storage modulus at 25°C of about 2 × 10³ MPa can be produced.

The fact that urethane resins can be provided so as to widely vary in flexibility means that the flexibility can be controlled in accordance with the need. Thus, in accordance with, for example, the configuration of the battery cover sheet 10 or the battery pack, a sheet member having suitable flexibility can be obtained. Furthermore, the urethane resin has lower viscosity during processing than other resins, and curing is achieved at ordinary temperature and does not require high temperature. This provides, during production of the battery cover sheet 10, high processibility or high production efficiency.

The more specific formula of the urethane resin is not particularly limited. For example, the polyisocyanate and the polyol used as raw materials for the urethane resin can be appropriately selected from publicly known ones. For example, typical examples of the polyisocyanate include aromatic, alicyclic, or aliphatic polyisocyanates having two or more isocyanate groups, and modified polyisocyanates provided by modifying the foregoing. These polyisocyanates may be prepolymers. Typical examples of the polyol include polyether-based polyols, polyester-based polyols, polyhydric alcohols, and hydroxy-group-containing diene-based polymers. These polyisocyanates or polyols may be used alone or in appropriate combination of two or more thereof. A catalyst for accelerating the resinification reaction of the polyisocyanate and the polyol may be used. Examples of the catalyst include amine catalysts, metal-compound-based catalysts, and isocyanurate-forming catalysts. These catalysts may also be used alone or in combination of two or more thereof.

The resin composition forming the battery cover sheet 10 contains, in addition to the resin component, at least an inorganic filler. This inorganic filler can contribute to the flame retardancy or heat dissipation of the battery cover sheet 10 (sheet member). The inorganic filler is at least one selected from the group consisting of divalent or trivalent metal hydroxides such as aluminum hydroxide, magnesium hydroxide, and calcium hydroxide; divalent metal sulfates such as calcium sulfate and magnesium sulfate; zinc salts of oxoacids such as zinc borate and zinc stannate; silica; alumina; dawsonite; and sodium hydrogen carbonate. These inorganic fillers may be used alone or in combination of two or more appropriately selected therefrom.

In the battery cover sheet 10 according to the present disclosure, of the above-described inorganic fillers, in particular, a divalent or trivalent metal hydroxide such as aluminum hydroxide or magnesium hydroxide is preferably used. Such divalent or trivalent metal hydroxides generate water upon heating, to thereby impart high flame retardancy to the battery cover sheet 10 and also to provide high heat dissipation of the battery cover sheet 10.

Other preferred examples of the inorganic filler include divalent metal sulfates such as calcium sulfate and magnesium sulfate. Such divalent metal sulfates tend to form hydrates, and hence generate water upon heating as in divalent or trivalent metal hydroxides. Another preferred example of the inorganic filler is sodium hydrogen carbonate. Sodium hydrogen carbonate also generates water upon heating. Furthermore, such a divalent or trivalent metal hydroxide and sodium hydrogen carbonate may be used in combination. Sodium hydrogen carbonate is less expensive than aluminum hydroxide or magnesium hydroxide. Thus, use of these in combination provides high flame retardancy and high heat dissipation, and also achieves reduction in the increase in the production costs of the battery cover sheet 10.

The inorganic filler can be added as powder to the resin component. The average particle size of the inorganic filler is not particularly limited, and is generally in a range of 0.5 to 40 µm, more preferably in a range of 2 to 20 µm. The shape of the powder of the inorganic filler is also not particularly limited, and various shapes such as a spherical shape, a flake shape (scalelike shape), an acicular shape, and an amorphous shape can be employed. Incidentally, the measurement method for the average particle size is not particularly limited, and the average particle size can be determined by particle size analysis using the publicly known laser diffraction method.

The resin composition forming the battery cover sheet 10 may contain, in addition to the resin component and the inorganic filler, publicly known additives. Non-limiting examples of the additives include a blowing agent, a foam stabilizer, a filler, a stabilizer, a colorant, a flame retardant, and a plasticizer. In particular, in the present disclosure, as described above, it is important that the battery cover sheet 10 has flame retardancy. Thus, the resin composition preferably contains a flame retardant.

Specifically, the flame retardant is not particularly limited, and examples include phosphorus-based flame retardants, halogen-based flame retardants, and melamine-based flame retardants. Examples of the phosphorus-based flame retardants include halogen-containing phosphates such as tris(2-chloroethyl) phosphate and tris(2,3-dibromopropyl) phosphate; non-halogen phosphates such as trimethyl phosphate, tricresyl phosphate, trisxylenyl phosphate, and triphenyl phosphate; and ammonium polyphosphate. Examples of the halogen-based flame retardants include decabromodiphenyl ether, pentabromodiphenyl ether, hexabromocyclododecane, tetrabromobisphenol A, and hexabromobenzene. Examples of the melamine-based flame retardants include melamine cyanurate. Furthermore, antimony compounds such as antimony trioxide may also be used as flame retardants. A combination of an antimony compound and a halogen-based flame retardant provides further improved flame retardancy.

The specific formula of the resin composition forming the battery cover sheet 10 is not particularly limited. In the present disclosure, as long as the resin composition is composed of at least two components that are a resin component and an inorganic filler, the inorganic filler content is not specifically limited. From the viewpoint of the flame retardancy of the resultant battery cover sheet 10, relative to 100 mass% of the total amount of the resin composition (the whole resin composition), the inorganic filler content (content ratio) is in a range of 30 to 95 mass%, preferably in a range of 45 to 70 mass%.

When the inorganic filler content is more than 95 mass%, though it depends on the type of the resin component, the resin component content relative to the whole resin composition may be excessively low, and a suitable sheet member (battery cover sheet 10) may not be obtained. On the other hand, when the inorganic filler content is less than 50 mass%, though it depends on the type of the inorganic filler or the resin component, the inorganic filler content may be excessively low and high flame retardancy or high heat dissipation may not be imparted to the sheet member. However, it is apparent that the inorganic filler content can be appropriately set in accordance with the desired properties of the resin composition (the sheet member or the battery cover sheet 10), and is not particularly limited to the above-described ranges.

### [Fibrous substrate included in battery cover sheet]

The battery cover sheet 10 according to the present disclosure, which, as described above, is formed of at least a resin composition containing an inorganic filler, may further include a fibrous substrate. The specific species of the fiber forming the fibrous substrate is not particularly limited, and publicly known fibrous materials can be suitably used. Specific examples include inorganic fibers such as glass fiber, carbon fiber, boron fiber, and basalt fiber; organic resin fibers such as polyester fiber, aramid fiber, nylon fiber, polyethylene fiber, polyarylate fiber, BPO fiber, polyphenylene sulfide (PPS) fiber, and polyimide fiber; and fluorofiber. These fibrous materials may be used alone or in appropriate combination of two or more thereof.

For selection of the fibrous material used for the fibrous substrate, a suitable material can be appropriately selected in accordance with various desired conditions for the battery cover sheet 10, such as flexibility, suppression of thermal propagation, or increase in the strength of the sheet member. For example, in a case where the strength of the battery cover sheet 10 is a priority, at least one fibrous material can be selected from the group consisting of glass fiber, carbon fiber, boron fiber, basalt fiber, para-aramid fiber, nylon fiber, ultra-high-molecular-weight polyethylene fiber, polyarylate fiber, and BPO fiber, for example. Alternatively, in a case where heat resistance or flame retardancy of the battery cover sheet 10 is a priority, at least one fibrous material can be selected from the group consisting of glass fiber, basalt fiber, PPS fiber, polyimide fiber, fluorofiber, meta-aramid fiber, and BPO fiber, for example.

The fibers forming the fibrous substrate may be filaments or staple fibers. However, in the case of mixing staple fibers themselves with the resin composition, they may function, not as the "substrate" of the battery cover sheet 10, but as "filler" for the resin composition. Thus, staple fibers are preferably spun and used as yarn (spun yarn), or used as nonwoven fabric. Incidentally, the above-described typical fibrous materials are chemical fibers such as synthetic fibers or inorganic fibers, and production of filaments (spinning) can be easily achieved. Thus, fibrous substrates formed of filaments can be suitably used.

The fibrous substrate may be formed of filaments themselves (filament yarn), or formed of twist yarn or bundles of filaments. For example, in the case of using, as the fibrous material, inorganic fiber such as glass fiber, rovings can be suitably used. Rovings are paralleled strands of bundles of glass-fiber monofilaments (glass-fiber filaments or filament yarn), and are ordinarily wound into a cylindrical form.

When the fibrous substrate is formed of "yarn materials" such as monofilaments (filaments or filament yarn) or rovings, the fibrous substrate can have a configuration in which the yarn materials are arranged in parallel so as to extend in the longitudinal direction of the battery cover sheet 10. When the fibrous substrate has such a configuration of parallel arrangement, the resin composition functions as a binder for the fibrous substrate.

The fibrous substrate, which may be formed of, as described above, yarn materials themselves, may alternatively be formed of braid, woven fabric, knitted fabric, or nonwoven fabric. In other words, as the fibrous substrate, yarn materials processed into cloth may be used as a "cloth material".

Specific configuration examples of the cloth material forming the fibrous substrate are as follows: examples of the braid include flat braid, round braid, square braid, and interlocking braid; examples of the woven fabric include plain weave, twill weave, and sateen weave; examples of the knitted fabric include plain stitch, rib stitch, interlock stitch, and purl stitch; examples of the nonwoven fabric include needlepunched nonwoven, thermobonded nonwoven, spunbonded nonwoven, and meltblown nonwoven; however, the specific configurations of the cloth materials are also not particularly limited. Of these cloth materials, the woven fabric or the knitted fabric may be formed of derivative weave, or may be formed so as to include foundation weave and derivative weave. Alternatively, the nonwoven fabric may be chemical bonded nonwoven as long as it does not affect various properties of the battery cover sheet 10.

When the battery cover sheet 10 includes, in addition to the resin composition, the fibrous substrate, the combination state of the resin composition and the fibrous substrate is not particularly limited. For example, the combination may be achieved such that the fibrous substrate is entirely covered with the resin composition (or the fibrous substrate is embedded in the resin composition), or the fibrous substrate may not be entirely covered with the resin composition. For example, when the fibrous substrate is formed of a cloth material, the resin composition may be disposed only on the outer peripheral surface or the inner peripheral surface of the cloth material. Alternatively, for example, the yarn materials forming a woven-fabric fibrous substrate may be covered with the resin composition, and gaps may be formed between the yarn materials. The same applies to other cloth materials such as the knitted fabric.

When the fibrous substrate is a cloth material, a single cloth material alone may be used or a stack of a plurality of cloth materials may be used. The number of the fibrous substrates (cloth materials) stacked can be adjusted to thereby change the thickness of the battery cover sheet 10. Incidentally, a stack (fibrous-substrate stack) in which a plurality of fibrous substrates (cloth materials) are stacked can be handled as a single thick fibrous substrate (cloth material). When the fibrous substrate is a stack of cloth materials, the number of cloth materials stacked is not particularly limited, and can be appropriately set in accordance with the thickness of the battery cover sheet 10. In Examples described later, as the cloth materials, two to four polyester nonwoven fabrics are employed as examples; alternatively, only a single cloth material or a stack of five or more cloth materials may be used in accordance with the thickness of the battery cover sheet 10.

The combination ratio of the resin composition and the fibrous substrate forming the battery cover sheet 10 is not particularly limited. Typically, the battery cover sheet 10 can have a fiber volume fraction Vf in a range of 0.5 to 50%, preferably in a range of 1 to 30%, more preferably in a range of 3 to 15%. The fiber volume fraction Vf is publicly known in, for example, the field of carbon fiber reinforced plastic (CFRP), and is an index that indicates (in a volume ratio), in a composite material composed of fiber matrix materials, the amount of fibers (content) contained in the whole composite material. Also in the present disclosure, in the sheet member formed of at least the fibrous substrate and the resin composition, the fibrous substrate content can be represented by fiber volume fraction Vf. Incidentally, the fiber volume fraction Vf can be calculated in accordance with JIS K7075.

When the battery cover sheet 10 including the fibrous substrate has a fiber volume fraction Vf of 50% or more, though it depends on various conditions, the battery cover sheet 10 may have lowered flexibility, so that it may become difficult to cover, along the outer peripheral surface of a battery for being covered (such as the cylindrical lithium-ion battery 20A), the outer peripheral surface; in addition, the absolute quantity of the resin composition contained in the battery cover sheet 10 may be excessively small, so that it may not impart high flame retardancy or high heat dissipation to the battery cover sheet 10.

On the other hand, it is practically difficult to produce the battery cover sheet 10 that has a fiber volume fraction Vf of less than 0.5%. Specifically, in the case of the battery cover sheet 10 formed of at least a resin composition containing an inorganic filler and a fibrous substrate, even when the fibrous substrate employed is a thin fibrous substrate that provides the minimum effect of increasing the strength, the resultant fiber volume fraction Vf becomes 0.5% or more. Stated another way, even if the battery cover sheet 10 that has a fiber volume fraction Vf of less than 0.5% can be produced, the absolute quantity of the fibrous substrate contained in the battery cover sheet 10 is excessively small, so that the strength of the battery cover sheet 10 cannot be suitably increased.

As has been described, in such a case where the battery cover sheet 10 according to the present disclosure contains, in addition to the resin composition containing an inorganic filler, the fibrous substrate, the battery cover sheet 10 has high flame retardancy or high heat dissipation due to the inorganic filler contained in the resin composition, and high strength due to the fibrous substrate. Thus, for example, during covering of the outer surface of a battery with the battery cover sheet 10, or during combining of batteries covered with the battery cover sheet 10 (sheet-covered batteries 30A) into a battery pack, the risk of breakage of the battery cover sheet 10 is effectively reduced, and heat from the batteries can be dissipated throughout the adjacent battery cover sheet 10.

Incidentally, in the present disclosure, the battery cover sheet 10, which is formed of at least the resin composition containing an inorganic filler, may be, as described above as a preferred example, formed of the resin composition and the fibrous substrate; however, the present disclosure is not limited to this. The battery cover sheet 10 may include, in addition to the resin composition and the fibrous substrate, another component or member as long as it does not hinder the battery cover sheet 10 from having desired various properties.

### [Battery pack]

The battery pack according to the present disclosure is constituted by at least batteries covered with the above-described battery cover sheet 10, and the specific configuration thereof is not particularly limited. Typically, for example, batteries are each covered with the battery cover sheet 10 to provide sheet-covered batteries 30A, and the plurality of sheet-covered batteries 30A are arranged to produce the battery pack. In this case, in accordance with, for example, the shape of the package of the battery pack, the arrangement or combination form of the sheet-covered batteries 30A can be adjusted. This can provide, during production of the battery pack, improved universal usability, applicability, or design.

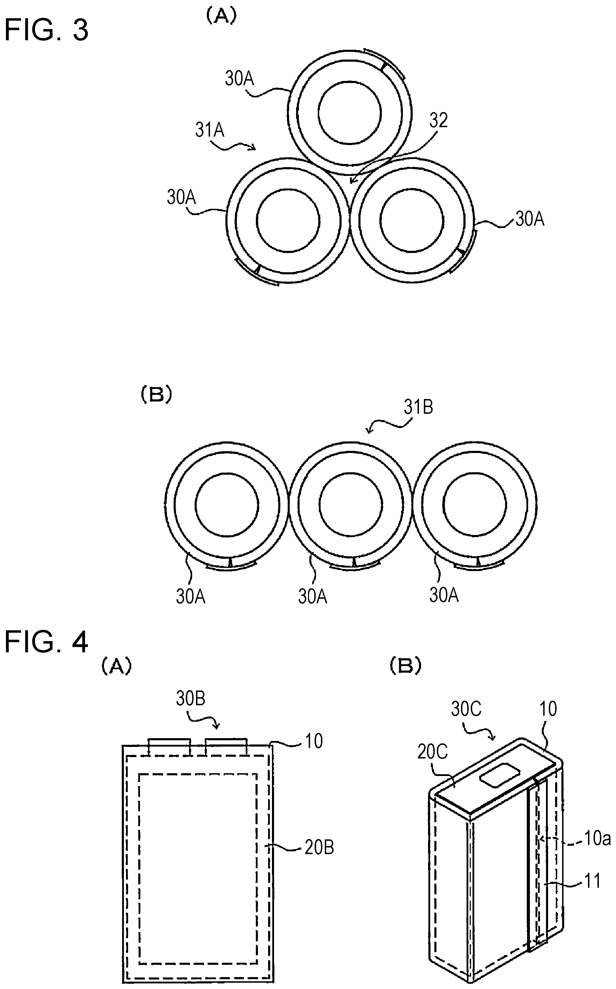

During production of the battery pack, the minimum unit of a combination of a plurality of sheet-covered batteries 30A is not particularly limited; for example, as illustrated in Fig. 3(A) or Fig. 3(B), three sheet-covered batteries 30A can be combined together to provide a minimum unit that is a battery pack unit 31A or a battery pack unit 31B. For example, referring to Fig. 3(A), the battery pack unit 31A is provided as a unit in which three sheet-covered batteries 30A are arranged in parallel to form a triangular shape when viewed from above. This battery pack unit 31A has, among three adjacent sheet-covered batteries 30A, a dead space 32.

Such a sheet-covered battery 30A is provided by covering the outer peripheral surface of the cylindrical lithium-ion battery 20A with the battery cover sheet 10, and hence the sheet-covered battery 30A is also cylindrical. Combining together of three sheet-covered batteries 30A inevitably results in formation of the dead space 32 among the adjacent cylinders. This dead space 32 is regarded as, from the viewpoint of the battery pack, a space including no resin. Thus, compared with existing battery packs filled with potting materials, a reduction in the weight of resin can be achieved to thereby achieve a reduction in the weight of the battery pack.

Unlike the battery pack unit 31A, referring to Fig. 3(B), the battery pack unit 31B is provided as a flat-plate-shaped unit in which three sheet-covered batteries 30A are arranged in parallel to form a line when viewed from above. Unlike the battery pack unit 31A, this battery pack unit 31B does not have, within the unit itself, the dead space 32. However, arrangement of such battery pack units 31B so as to be adjacent to each other results in formation of the dead space 32 among three adjacent sheet-covered batteries 30A, as in the battery pack unit 31A. Thus, compared with existing battery packs filled with potting materials, a reduction in the weight of resin can be achieved to thereby achieve a reduction in the weight of the battery pack.

In addition, as described above, since the battery cover sheet 10 has suitable flexibility, the battery cover sheet 10 wound around the outer peripheral surface of the cylindrical lithium-ion battery 20A can substantially conform to and be in contact with the outer peripheral surface of the cylindrical lithium-ion battery 20A. As described above, since the battery cover sheet 10 is formed of resin and contains an inorganic filler, even in the case of generation of heat from the cylindrical lithium-ion battery 20A, it suitably dissipates the heat (achieves dissipation of the heat); in addition, like the battery pack units 31A and 31B in Figs. 3(A) and 3(B), such a battery pack is provided such that the battery cover sheets 10 are in contact with each other, so that heat from any cylindrical lithium-ion battery 20A can be dissipated throughout the battery cover sheet 10 of an adjacent sheet-covered battery 30A. This further improves the heat-dissipation effect.

The more specific configuration of the battery pack is not particularly limited, and, except for the battery cover sheet 10, publicly known configurations can be suitably employed. For example, the battery pack can include a housing (casing) that houses the above-described battery pack unit 31A or 31B (or the sheet-covered batteries 30A) and lead members for establishing electrical connection among the batteries. The shape of the housing is not limited to the publicly known rectangular parallelepiped shape, and relatively complex shapes can be employed. This is intended that, in the present disclosure, the battery pack units 31A or 31B as the minimum units can be housed so as to fill the internal space of the housing.

As the lead members, publicly known configurations can be employed as long as they establish electrical connection among batteries such as the cylindrical lithium-ion batteries 20A in the battery pack unit 31A or 31B being housed. Specific examples include plate-shaped members and wiring members. Incidentally, in each battery pack unit 31A or 31B, the batteries may be connected together via lead members in advance, and furthermore such a plurality of battery pack units 31A or 31B may be connected together via lead members.

The process of producing (assembling) the battery pack is not particularly limited, and may be, for example, a process in which, as described above, the battery pack unit 31A or 31B or the sheet-covered batteries 30A are placed within a housing, and subsequently the plurality of batteries are connected together via lead members. Thus, the process of producing the battery pack may include the step of forming the sheet-covered batteries 30A, that is, the process of producing the sheet-covered batteries 30A.

Referring to Fig. 2, in such a sheet-covered battery 30A, the upper end and the lower end of the cylindrical lithium-ion battery 20A are exposed at the upper end and the lower end of the wound (surrounding) battery cover sheet 10. Stated another way, in the sheet-covered battery 30A, only the outer peripheral surface of the cylindrical lithium-ion battery 20A is covered with the battery cover sheet 10 formed of the resin composition. This results in prevention of incidents occurring in existing battery packs using potting materials, such as adhesion of resin to an upper end having the gas release valve 25. In existing battery packs, liquid potting materials are used, so that potting materials may flow into non-target regions and the potting materials may adhere to, for example, the upper end of a battery.

When such a battery is the cylindrical lithium-ion battery 20A, upon occurrence of a problem in the battery, the electrolytic solution may be partially decomposed to generate gas, resulting in an increase in the internal pressure of the battery. For this reason, the sealing part 22 of the cylindrical lithium-ion battery 20A includes the gas release valve 25 as described above. When the battery internal pressure increases beyond a predetermined value, the gas release valve 25 is opened. This releases the internal gas to the outside, to circumvent the increase in the battery internal pressure. However, when resin such as a potting material adheres to the upper end of the cylindrical lithium-ion battery 20A, the gas release valve 25 may not appropriately function, and may not appropriately release the internal gas.

According to the present disclosure, the battery cover sheet 10 can be disposed only on the outer peripheral surface of the cylindrical lithium-ion battery 20A. This substantially eliminates the possibility that unsuitable adhesion of a potting material causes the gas release valve 25 to malfunction.

In addition, in the case of using a potting material, during injection of the potting material into the battery pack, the potting material may undergo entry of bubbles. When the potting material containing bubbles is cured, properties of the potting material may be affected. In addition, as described above, in order to prevent the potting material from adhering to non-target regions such as the upper end of a battery, a frame member or a molding member for controlling flow of the potting material becomes necessary. In addition, in order to heat-cure a liquid potting material, heating means becomes necessary; alternatively, when the potting material is of a twocomponent mixing type, mixing means for preparing the potting material becomes necessary.

By contrast, in the present disclosure, liquid potting materials are not used, and the battery cover sheet 10, which is a sheet member having flexibility, is used to just cover the outer peripheral surface of a battery and fixed. This eliminates the necessity of the frame member, the molding member, the heating means, the mixing means, and the like and also eliminates the necessity of the curing time for curing potting materials. Thus, during production of the battery pack, in addition to increase in the production efficiency, suppression of the increase in the production costs can be achieved.

### (Embodiment 2)

In Embodiment 1 above, the present disclosure has been described with reference to, as the battery to be covered with the battery cover sheet 10, the cylindrical lithium-ion battery 20A; however, the present disclosure is not limited to this. In this Embodiment 2, the battery to be covered with the battery cover sheet 10 may be, referring to Fig. 4(A), a laminate lithium-ion battery 20B or, referring to Fig. 4(B), a prismatic lithium-ion battery 20C.

In the example illustrated in Fig. 4(A), the outer surface of the laminate lithium-ion battery 20B, for example, the outer surface except for an end having electrodes can be covered with the battery cover sheet 10, to thereby form a sheet-covered battery 30B. In this case, though not shown in Fig. 4(A), as in the sheet-covered battery 30A according to Embodiment 1 above, a fixing member such as an adhesive tape 11 or an adhesive 12 can be used to fix the battery cover sheet 10 on the outer surface of the laminate lithium-ion battery 20B.

In another example illustrated in Fig. 4(B), the outer surface of the prismatic lithium-ion battery 20C, for example, the outer peripheral surface except for both ends can be covered with the battery cover sheet 10, to thereby form a sheet-covered battery 30C. In this case, in the example illustrated in Fig. 4(B), as in the sheet-covered battery 30A according to Embodiment 1 above, onto a seam 10a where ends of the overlying battery cover sheet 10 are butted together, an adhesive tape 11 (or an adhesive 12 or another fixing member) can be applied, to achieve fixing.

In the examples illustrated in, for example, Figs. 1(A) to 1(C) and Figs. 4(A) and 4(B), the sheet-covered batteries 30A to 30C each have a configuration in which the battery cover sheet 10 covers (is wound around) the whole outer surface of the battery; however, the present disclosure is not limited to this. As described above, for only a portion (such as a region where the probability of heat generation is expected to be high), the outer surface of the battery may be partially covered with the battery cover sheet 10. Alternatively, the battery cover sheet 10 may be wound a plurality of times around the outer surface of the battery to cover the outer surface. In this case, on the outer surface of the battery, the battery cover sheet 10 is stacked as a plurality of layers.

In addition, in the examples illustrated in, for example, Figs. 1(A) to 1(C) and Figs. 4(A) and 4(B), in each of the sheet-covered batteries 30A to 30C, the battery cover sheet 10 covers the whole outer surface of the battery such that the ends of the battery cover sheet 10 are butted together (to form the seam 10a); however, the present disclosure is not limited to this. For example, ends of the battery cover sheet 10 may partially overlap. However, from the viewpoint of providing the battery intervals so as to be kept constant, such an overlap of the ends is preferably avoided.

As described above, in such a sheet-covered battery, at least partially the outer surface of the battery is covered with the battery cover sheet. Thus, the battery pack according to the present disclosure at least includes a structure in which the outer surface of a battery is at least partially covered with the battery cover sheet. A preferred example is as follows: as in the examples described in Embodiment 1 above, a structure in which, for all the sheet-covered batteries constituting the battery pack, the battery cover sheets may be wound around and cover the whole outer peripheral surfaces of the batteries (the whole peripheral surfaces except for end surfaces) (refer to Figs. 3(A) and 3(B)). However, for example, from the viewpoint of suppressing thermal propagation, sheet-covered batteries that are partially covered with the battery cover sheets may constitute a battery pack.

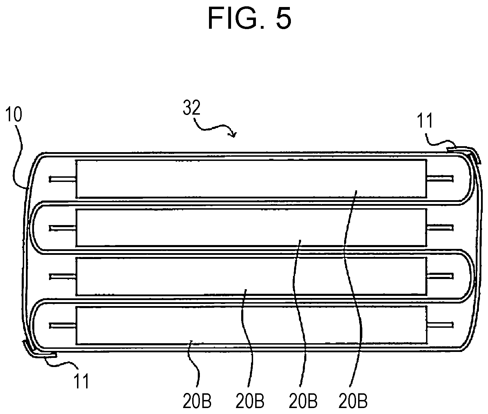

Moreover, the battery pack may include a structure in which a single battery cover sheet covers the outer surfaces of a plurality of batteries. For example, as illustrated in Fig. 5, when the batteries to be covered are laminate lithium-ion batteries 20B, the following structure may be employed: the plurality of laminate lithium-ion batteries 20B (four batteries in Fig. 5) are stacked, and a single battery cover sheet 10 is wound in a zigzag pattern such that the battery cover sheet 10 covers both outer surfaces of adjacent laminate lithium-ion batteries 20B.

In the structure illustrated in Fig. 5, the plurality of (four) laminate lithium-ion batteries 20B stacked and the single battery cover sheet 10 covering the batteries so as to combine together the batteries constitute a battery pack unit 32. In the battery pack unit 32 illustrated in Fig. 5, both side surfaces (in Fig. 5, the near-side surface and the far-side surface (not shown)) are not covered with the battery cover sheet 10, and the side surfaces of the plurality of laminate lithium-ion batteries 20B are exposed.

Both end surfaces of the battery pack unit 32 (left-side and right-side surfaces in Fig. 5) are entirely covered with the battery cover sheet 10. In each of the laminate lithium-ion batteries 20B in Fig. 5, both ends are provided with electrodes; thus, on both end surfaces of the battery pack unit 32, the electrodes of the laminate lithium-ion batteries 20B are positioned. The battery cover sheet 10 covers both end surfaces, without contact with the plurality of electrodes positioned on both end surfaces, so as to wrap up both end surfaces.

The ends of the battery cover sheet 10 covering the both end surfaces are fixed with adhesive tapes 11. In Fig. 5, for the right-side end surface of the battery pack unit 32, the battery cover sheet 10 covers the end surface from the bottom toward the top in the drawing, so that the end of the battery cover sheet 10 is positioned on the upper side of the drawing, and reaches the upper surface of the battery pack unit 32. Thus, the end of the battery cover sheet 10 is fixed on the battery cover sheet 10 on the upper surface of the battery pack unit 32 using the adhesive tape 11.

On the other hand, in Fig. 5, for the left-side end surface of the battery pack unit 32, the battery cover sheet 10 covers the end surface from the top toward the bottom in the drawing, so that the end of the battery cover sheet 10 is positioned on the lower side of the drawing, and reaches the lower surface of the battery pack unit 32. Thus, the end of the battery cover sheet 10 is fixed on the battery cover sheet 10 on the lower surface of the battery pack unit 32 using the adhesive tape 11. Thus, in the battery pack unit 32 in Fig. 5, ends of the battery cover sheet 10 that are positioned on both end surfaces are fixed on the outermost surfaces (the upper surface or the lower surface) of the battery pack unit 32 using the adhesive tapes 11 (or other fixing members).

In this way, the single battery cover sheet 10 is used to cover the outer surfaces of a plurality of batteries, to thereby achieve a reduction in the absolute quantity of the battery cover sheet 10 constituting the battery pack. Thus, compared with the case where the batteries are individually covered with the battery cover sheets 10, a reduction in the weight of resin can be achieved, to thereby achieve a reduction in the weight of the battery pack.

As has been described, the battery cover sheet according to the present disclosure is a sheet member that is at least formed of a resin composition containing an inorganic filler, and that has flexibility. Thus, the battery cover sheet can be used just to cover the outer surface of a battery, to thereby easily produce a battery holder that houses the battery. In addition, a plurality of batteries covered with the battery cover sheet (sheet-covered batteries) can be just arranged and combined together to thereby easily produce a battery pack. The battery cover sheet contains the inorganic filler, to thereby achieve suitable dissipation of heat from the batteries. Thus, compared with the case of filling with a liquid potting material, increase in the production efficiency can be achieved.

In addition, when the battery cover sheet according to the present disclosure is used to form a battery pack, since the necessity of use of a liquid potting material has been eliminated, it is no longer necessary to take measure for preventing entry of bubbles into the potting material or flowing of the potting material into non-target regions. Furthermore, curing of a liquid potting material is no longer performed, which eliminates the necessity of equipment such as a mold or heating means (or mixing means when the potting material is of a two-component mixing type), and also eliminates the necessity of curing time. Thus, in addition to increase in the production efficiency of the battery pack, suppression of the increase in the production costs can be achieved.

Furthermore, the battery cover sheet according to the present disclosure can be provided to have a uniform thickness, so that, compared with the case of filling with a liquid potting material, batteries can be arranged at more precise intervals. In addition, the battery cover sheet has flexibility, and hence can be used to easily cover, along the shape of the outer surfaces of batteries, the outer surfaces of the batteries. Thus, for any type of batteries, a battery holder and a battery pack can be easily produced.

Moreover, when the battery cover sheet according to the present disclosure is used, a plurality of batteries covered with the battery cover sheet can be just combined together to provide a battery pack, so that, in the battery pack, the batteries can be arranged in parallel with the battery cover sheet therebetween, substantially without gaps. Thus, as in the potting material, heat from the batteries can be dissipated to the adjacent battery cover sheet. Furthermore, a single battery cover sheet can be used to cover a plurality of batteries, so that the single battery cover sheet can be used to prevent propagation of heat from a battery to another battery and to dissipate the heat.

In addition, in the present disclosure, a battery pack is provided by just combining together and arranging a plurality of batteries covered with the battery cover sheet, so that the resultant battery pack can be inspected by just examining the appearance. In addition, the battery cover sheet is used to just cover the batteries, so that, during production of the battery pack, the arrangement or combination form of the batteries can be adjusted in accordance with, for example, the shape of the package of the battery pack. This can provide, during production of the battery pack, improved universal usability, applicability, or design.

Incidentally, as described above, the battery cover sheet 10 according to the present disclosure may cover, as described above, the outer surface of a single battery (refer to Figs. 1(A) to 1(C)), or may cover the outer surfaces of a plurality of batteries (refer to Fig. 5). In this case, the battery cover sheet 10 can cover substantially the whole outer peripheral surface (as described above, of the outer surface, the side surface except for both end surfaces) of such a battery, or may alternatively cover a half or more of the outer peripheral surface. Covering a half or more of the outer peripheral surface can achieve higher flame retardancy and higher heat dissipation.

### EXAMPLES

The present invention will be more specifically described with reference to Examples and Comparative Examples. Incidentally, in Examples below, thermal-runaway-propagation prevention tests and calculation of fiber volume fraction Vf were performed in the following manner.

### (Thermal-runaway-propagation prevention test of cylindrical lithium-ion batteries)

The outer peripheral surface (except for both end surfaces) of a 18650-type lithium-ion battery (discharge capacity: 3 Ah) was covered with a battery cover sheet of an Example or a Comparative Example, and the battery cover sheet was fixed with an imide tape serving as an adhesive tape to thereby provide a sheet-covered battery. For such sheet-covered batteries, three of them were arranged in parallel and fixed to produce a test battery pack (refer to Fig. 3(B)).

Of the three sheet-covered batteries of the test battery pack, a sheet-covered battery at an end was penetrated from the outer periphery by being pierced with an N45 iron nail at a rate of 30 mm/s. The sheet-covered battery penetrated with the iron nail was defined as a "heat-source battery"; a sheet-covered battery (a sheet-covered battery at the center) adjacent to the heat-source battery was defined as an "adjacent battery"; in an environment at 25°C, under monitoring of the temperature of the adjacent battery, it was determined whether or not thermal runaway propagation occurred from the heat-source battery to the other sheet-covered batteries. Cases of no occurrence of thermal runaway propagation were evaluated as "○", and cases of occurrence of thermal runaway propagation were evaluated as "×".

In addition, such test battery packs having been determined in terms of occurrence of thermal runaway propagation were also evaluated as to whether or not the battery cover sheets broke and as to whether or not the battery cover sheets melt-flowed. This is defined as the post-test evaluation of the battery cover sheets. Cases of no occurrence of breakage in the battery cover sheets were evaluated as "O", and cases of occurrence of breakage were evaluated as "×". Cases of no occurrence of melt-flowing in the battery cover sheets were evaluated as "○", and cases of occurrence of melt-flowing were evaluated as "×".

### (Thermal-runaway-propagation prevention test of laminate lithium-ion batteries)

Laminate lithium-ion batteries having a length of 140 mm, a width of 55 mm, a thickness of 4.5 mm and a discharge capacity of 3 Ah were produced, and four of them were stacked such that a single battery cover sheet was wound in a zigzag pattern to produce a test battery pack (refer to Fig. 5).

Of the four laminate lithium-ion batteries of the test battery pack, the lithium-ion battery positioned at the lowermost surface was provided, on the outer surface, with a rectangular sheet-shaped heater (silicone rubber heater manufactured by HAKKO ELECTRIC CO., LTD., trade name: SBH2012, 25 mm × 50 mm). A voltage of 100 V was applied to the sheet-shaped heater; the battery in contact with the heater (the laminate lithium-ion battery positioned at the lowermost surface) was defined as a "heat-source battery", and a battery (the second laminate lithium-ion battery from the bottom) adjacent to the heat-source battery was defined as an "adjacent battery"; in an environment at 25°C, under monitoring of the temperature of the adjacent battery, it was determined whether or not thermal runaway propagation occurred from the heat-source battery to the other laminate lithium-ion batteries. Cases of no occurrence of thermal runaway propagation were evaluated as "○", and cases of occurrence of thermal runaway propagation were evaluated as "×".

In addition, such test battery packs having been determined in terms of occurrence of thermal runaway propagation were also evaluated as to whether or not the battery cover sheet broke and as to whether or not the battery cover sheet melt-flowed (post-test evaluation of battery cover sheet). Cases of no occurrence of breakage of the battery cover sheet were evaluated as "○", and cases of occurrence of breakage were evaluated as "×". Cases of no occurrence of melt-flowing of the battery cover sheet were evaluated as "○", and cases of occurrence of melt-flowing were evaluated as "×".

### (Fiber volume fraction Vf)

In accordance with JIS K7075, the nitric-acid and sulfuric-acid decomposition processes were performed to remove the resin content alone from a sheet member serving as a test piece, and to calculate the mass of the resin composition containing an inorganic filler (resin composition amount). From this resin composition amount and the mass of the sheet member, fiber mass fraction Wf was calculated. From this Wf, the density ρc of the sheet member, and the density ρf of glass fiber or polyester fiber used for the sheet member, formula: Vf = (Wf × ρc)/ρf was used to calculate fiber volume fraction Vf.

### (Example 1)

As the resin component, a urethane resin (trade name: EIMFLEX EF-243, manufactured by DAI-ICHI KOGYO SEIYAKU CO., LTD.) was used and, as the inorganic filler, aluminum hydroxide was used to prepare (produce) a urethane resin composition having an inorganic filler content of 65 mass%. As the fibrous substrate, nonwoven fabrics formed of polyester fibers (polyester nonwoven fabric, product number: B045S0-00X, manufactured by TAPYRUS CO., LTD.) were used; into a slit-molding mold having a predetermined thickness, a stack of two or three of the polyester nonwoven fabrics (stack) was placed; into the slit-molding mold, the urethane resin composition was injected in a vacuum, so that the polyester nonwoven fabrics were impregnated with the urethane resin composition and molded into a sheet shape. In this way, two types of sheet members were prepared (produced) as battery cover sheets in Example 1: a sheet member having a thickness of 2.0 mm and a fiber volume fraction Vf of 5% (number of polyester nonwoven fabrics: 3), and a sheet member having a thickness of 1.0 mm and a Vf of 8% (number of polyester nonwoven fabrics: 2).

In test battery packs provided by using the two types of battery cover sheets, the intervals between adjacent cylindrical lithium-ion batteries (battery intervals) were respectively 4.0 mm and 2.0 mm. These battery cover sheets of Example 1 were subjected to the above-described thermal-runaway-propagation prevention test. The results (the temperature of the adjacent battery, thermal-runaway-propagation evaluation, and post-test evaluation) will be described in Table 1.

### (Example 2)

As the resin component, the same urethane resin as in Example 1 was used, and, as the inorganic filler, aluminum hydroxide was used, to prepare (produce) a urethane resin composition having an inorganic filler content of 65 mass%. As the fibrous substrate, glass fibers (trade name: Multiend Roving; product number: ER 550E-2400, manufactured by DAISO CHEMICAL CO., LTD.) were used; the glass fibers being arranged in parallel were continuously sent out, and impregnated with the urethane resin composition and molded into a sheet shape. In this way, two types of sheet members were prepared (produced) as battery cover sheets in Example 2: a sheet member having a thickness of 2.0 mm and a fiber volume fraction Vf of 20% and a sheet member having a thickness of 1.0 mm and a Vf of 20%. The test battery packs provided by using the two types of battery cover sheets respectively have, as in Example 1, battery intervals of 4.0 mm and 2.0 mm. These battery cover sheets were subjected to the above-described thermal-runaway-propagation prevention test. The results will be described in Table 1.

### (Example 3)

Two types of sheet members respectively having a thickness of 2.0 mm and a thickness of 1.0 mm (incidentally, each having a Vf of 0%) were prepared as in Example 1 except that the fibrous substrate (polyester nonwoven fabric) was not used, to provide battery cover sheets in Example 3. These battery cover sheets were subjected to the above-described thermal-runaway-propagation prevention test. The results will be described in Table 1.

### (Example 4)

Two types of sheet members were prepared as in Example 1 except that, as the inorganic filler, magnesium hydroxide was used, to provide battery cover sheets in Example 4: a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 1.

### (Example 5)

Two types of sheet members were prepared as in Example 4 except that the fibrous substrate (polyester nonwoven fabric) was not used, to provide battery cover sheets in Example 5: sheet members having a thickness of 2.0 mm or a thickness of 1.0 mm (incidentally, each having a Vf of 0%). These battery cover sheets were subjected to the above-described thermal-runaway-propagation prevention test. The results will be described in Table 1.

### (Example 6)

Two types of sheet members were prepared as in Example 1 except that, as the inorganic filler, sodium hydrogen carbonate was used, to provide battery cover sheets in Example 6: a sheet member having a thickness of 2.0 mm and a Vf of 5% and a sheet member having a thickness of 1.0 mm and a Vf of 8%. These battery cover sheets were subjected to the above-described thermal-runaway-propagation prevention test. The results will be described in Table 1.

### (Example 7)

Two types of sheet members were prepared as in Example 6 except that the fibrous substrate (polyester nonwoven fabric) was not used, to provide battery cover sheets in Example 7: sheet members having a thickness of 2.0 mm or a thickness of 1.0 mm (incidentally, each having a Vf of 0%). These battery cover sheets were subjected to the above-described thermal-runaway-propagation prevention test. The results will be described in Table 1.

### (Example 8)

Two types of sheet members were prepared as in Example 1 except that, as the inorganic filler, magnesium sulfate was used, to provide battery cover sheets in Example 8: a sheet member having a thickness of 2.0 mm and a Vf of 5% and a sheet member having a thickness of 1.0 mm and a Vf of 8%. These battery cover sheets were subjected to the above-described thermal-runaway-propagation prevention test. The results will be described in Table 1.

### (Example 9)

Two types of sheet members were prepared as in Example 1 except that, as the inorganic filler, a mixture of aluminum hydroxide and sodium hydrogen carbonate mixed in 1:1 was used, to provide battery cover sheets in Example 9: a sheet member having a thickness of 2.0 mm and a Vf of 5% and a sheet member having a thickness of 1.0 mm and a Vf of 8%. These battery cover sheets were subjected to the above-described thermal-runaway-propagation prevention test. The results will be described in Table 1.

### (Example 10)

Two types of sheet members were prepared as in Example 1 except that, as the inorganic filler, a mixture of magnesium hydroxide and sodium hydrogen carbonate mixed in 1:1 was used, to provide battery cover sheets in Example 10: a sheet member having a thickness of 2.0 mm and a Vf of 5% and a sheet member having a thickness of 1.0 mm and a Vf of 8%. These battery cover sheets were subjected to the above-described thermal-runaway-propagation prevention test. The results will be described in Table 1.

### (Comparative Example 1)

Two types of sheet members were prepared as in Example 1 except that no inorganic filler was contained (specifically, the inorganic filler was not added and the urethane resin alone was used), to provide battery cover sheets in Comparative Example 1: a sheet member having a thickness of 2.0 mm and a Vf of 5% and a sheet member having a thickness of 1.0 mm and a Vf of 8%. These battery cover sheets were subjected to the above-described thermal-runaway-propagation prevention test. The results will be described in Table 1.

### (Comparative Example 2)

Two types of sheet members were prepared as in Example 1 except that the polyester nonwoven fabric or glass fiber serving as the fibrous substrate was not used, and the urethane resin alone without containing inorganic filler was used, to provide battery cover sheets in Comparative Example 2: sheet members having a thickness of 2.0 mm or a thickness of 1.0 mm. These battery cover sheets were subjected to the above-described thermal-runaway-propagation prevention test. The results will be described in Table 1.

**[Table 1]**

| | Inorganic filler of urethane resin composition | Fibrous substrate | | Fiber volume fraction Vf [%] | Battery intervals [mm] | Thickness [mm] | Temperature of adjacent battery [°C] | Thermal-runaway-propagation evaluation | Post-test evaluation | |
|---|---|---|---|---|---|---|---|---|---|---|
| | | Material | Number of substrates | | | | | | Breakage | Melting |
| Example 1 | Aluminum hydroxide | Polyester | 3 | 5 | 4.0 | 2.0 | 117 | ○ | ○ | ○ |
| | | | 2 | 8 | 2.0 | 1.0 | 134 | ○ | ○ | ○ |
| Example 2 | Aluminum hydroxide | Glass | - | 20 | 4.0 | 2.0 | 120 | ○ | ○ | ○ |
| | | | | 20 | 2.0 | 1.0 | 130 | ○ | ○ | ○ |
| Example 3 | Aluminum hydroxide | None | - | 0 | 4.0 | 2.0 | 112 | ○ | ○ | ○ |
| | | | | 0 | 2.0 | 1.0 | 124 | ○ | × | ○ |
| Example 4 | Magnesium hydroxide | Polyester | 3 | 5 | 4.0 | 2.0 | 122 | ○ | ○ | ○ |
| | | | 2 | 8 | 2.0 | 1.0 | 158 | ○ | ○ | ○ |
| Example 5 | Magnesium hydroxide | None | - | 0 | 4.0 | 2.0 | 122 | ○ | ○ | ○ |
| | | | | 0 | 2.0 | 1.0 | 151 | ○ | × | ○ |
| Example 6 | Sodium hydrogen carbonate | Polyester | 3 | 5 | 4.0 | 2.0 | 134 | ○ | ○ | ○ |
| | | | 2 | 8 | 2.0 | 1.0 | 143 | ○ | ○ | ○ |
| Example 7 | Sodium hydrogen carbonate | None | - | 0 | 4.0 | 2.0 | 127 | ○ | ○ | ○ |
| | | | | 0 | 2.0 | 1.0 | 139 | ○ | × | ○ |
| Example 8 | Magnesium sulfate | Polyester | 3 | 5 | 4.0 | 2.0 | 132 | ○ | ○ | ○ |
| | | | 2 | 8 | 2.0 | 1.0 | 150 | ○ | ○ | ○ |
| Example 9 | Aluminum hydroxide: Sodium hydrogen carbonate = 1:1 | Polyester | 3 | 5 | 4.0 | 2.0 | 132 | ○ | ○ | ○ |
| | | | 2 | 8 | 2.0 | 1.0 | 136 | ○ | ○ | ○ |
| Example 10 | Magnesium hydroxide: Sodium hydrogen carbonate = 1:1 | Polyester | 3 | 5 | 4.0 | 2.0 | 143 | ○ | ○ | ○ |
| | | | 2 | 8 | 2.0 | 1.0 | 139 | ○ | ○ | ○ |
| Comparative Example 1 | (Not contained) | Polyester | 3 | 5 | 4.0 | 2.0 | 500°C or higher | × | ○ | × |
| | | | 2 | 8 | 2.0 | 1.0 | 500°C or higher | × | ○ | × |
| Comparative Example 2 | (Not contained) | None | - | 0 | 4.0 | 2.0 | 500°C or higher | × | × | × |
| | | | | 0 | 2.0 | 1.0 | 500°C or higher | × | × | × |

### (Example 11)

As the resin component, the same urethane resin as in Example 1 was used and, as the inorganic filler, aluminum hydroxide was used to prepare (produce) a urethane resin composition having an inorganic filler content of 65 mass%. As the fibrous substrate, the same polyester nonwoven fabrics as in Example 1 were used; as in Example 1, a slit-molding mold was used and a stack of 2, 3, or 4 polyester nonwoven fabrics (stack) was impregnated with the urethane resin composition and molded into a sheet shape. Thus, three types of sheet members were prepared (produced) as battery cover sheets in Example 11: a sheet member having a thickness of 3.0 mm and a Vf of 5% (number of polyester nonwoven fabrics: 4), a sheet member having a thickness of 2.0 mm and a Vf of 5% (number of polyester nonwoven fabrics: 3), and a sheet member having a thickness of 1.0 mm and a Vf of 8% (number of polyester nonwoven fabrics: 2).

In test battery packs provided by using these three types of battery cover sheets, the intervals between adjacent laminate lithium-ion batteries (battery intervals) were respectively 3.0 mm, 2.0 mm, and 1.0 mm (which are exactly equal to the thicknesses of the battery cover sheets). These battery cover sheets in Example 11 were subjected to the above-described thermal-runaway-propagation prevention test. The results (temperature of adjacent battery, thermal-runaway-propagation evaluation, and post-test evaluation) will be described in Table 2.

### (Example 12)

As the resin component, the same urethane resin as in Example 1 was used and, as the inorganic filler, aluminum hydroxide was used to prepare (produce) a urethane resin composition having an inorganic filler content of 65 mass%. As the fibrous substrate, the glass fibers in Example 2 were used; these glass fibers being arranged in parallel were continuously sent out, and impregnated with the urethane resin composition and molded into a sheet shape. In this way, three types of sheet members were prepared (produced) as battery cover sheets in Example 12: a sheet member having a thickness of 3.0 mm and a Vf of 10%, a sheet member having a thickness of 2.0 mm and a Vf of 15%, and a sheet member having a thickness of 1.0 mm and a Vf of 20%.

In test battery packs provided by using these three types of battery cover sheets, as in Example 11, the battery intervals were exactly equal to the thicknesses of the battery cover sheets. These battery cover sheets were subjected to the above-described thermal-runaway-propagation prevention test. The results will be described in Table 2.

### (Example 13)

Three types of sheet members were prepared as in Example 11 except that the fibrous substrate (polyester nonwoven fabric) was not used, to provide battery cover sheets in Example 13: sheet members having a thickness of 3.0 mm, 2.0 mm, or 1.0 mm (incidentally, each having a Vf of 0%). These battery cover sheets were subjected to the above-described thermal-runaway-propagation prevention test. The results will be described in Table 2.

### (Example 14)

Three types of sheet members were prepared as in Example 11 except that, as the inorganic filler, magnesium hydroxide was used, to provide battery cover sheets in Example 14: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 2.

### (Example 15)

Three types of sheet members were prepared as in Example 14 except that the fibrous substrate (polyester nonwoven fabric) was not used, to provide battery cover sheets in Example 15: sheet members having a thickness of 3.0 mm, 2.0 mm, or 1.0 mm (incidentally, each having a Vf of 0%). These battery cover sheets were subjected to the above-described thermal-runaway-propagation prevention test. The results will be described in Table 2.

### (Example 16)

Three types of sheet members were prepared as in Example 11 except that, as the inorganic filler, sodium hydrogen carbonate was used, to provide battery cover sheets in Example 16: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 2.

### (Example 17)

Three types of sheet members were prepared as in Example 16 except that the fibrous substrate (polyester nonwoven fabric) was not used, to provide battery cover sheets in Example 17: sheet members having a thickness of 3.0 mm, 2.0 mm, or 1.0 mm (incidentally, each having a Vf of 0%). These battery cover sheets were subjected to the above-described thermal-runaway-propagation prevention test. The results will be described in Table 2.

**[Table 2]**

| | Inorganic filler of urethane resin composition | Fibrous substrate | | Fiber volume fraction Vf [%] | Battery intervals [mm] | Thickness [mm] | Temperature of adjacent battery [°C] | Thermal-runaway-propagation evaluation | Post-test evaluation | |
|---|---|---|---|---|---|---|---|---|---|---|
| | | Material | Number of substrates | | | | | | Breakage | Melting |
| Example 11 | Aluminum hydroxide | Polyester | 4 | 5 | 3.0 | 3.0 | 85 | ○ | ○ | ○ |
| | | | 3 | 5 | 2.0 | 2.0 | 112 | ○ | ○ | ○ |
| | | | 2 | 8 | 1.0 | 1.0 | 123 | ○ | ○ | ○ |
| Example 12 | Aluminum hydroxide | Glass | - | 10 | 3.0 | 3.0 | 90 | ○ | ○ | ○ |
| | | | | 15 | 2.0 | 2.0 | 118 | ○ | ○ | ○ |
| | | | | 20 | 1.0 | 1.0 | 123 | ○ | ○ | ○ |
| Example 13 | Aluminum hydroxide | None | - | 0 | 3.0 | 3.0 | 84 | ○ | ○ | ○ |
| | | | | 0 | 2.0 | 2.0 | 105 | ○ | ○ | ○ |
| | | | | 0 | 1.0 | 1.0 | 117 | ○ | × | ○ |
| Example 14 | Magnesium hydroxide | Polyester | 4 | 5 | 3.0 | 3.0 | 87 | ○ | O | ○ |
| | | | 3 | 5 | 2.0 | 2.0 | 116 | ○ | ○ | ○ |
| | | | 2 | 8 | 1.0 | 1.0 | 145 | ○ | ○ | ○ |
| Example 15 | Magnesium hydroxide | None | - | 0 | 3.0 | 3.0 | 85 | ○ | ○ | ○ |
| | | | | 0 | 2.0 | 2.0 | 114 | ○ | ○ | ○ |
| | | | | 0 | 1.0 | 1.0 | 139 | ○ | × | ○ |
| Example 16 | Sodium hydrogen carbonate | Polyester | 4 | 5 | 3.0 | 3.0 | 95 | ○ | ○ | ○ |
| | | | 3 | 5 | 2.0 | 2.0 | 124 | ○ | ○ | ○ |
| | | | 2 | 8 | 1.0 | 1.0 | 127 | ○ | ○ | ○ |
| Example 17 | Sodium hydrogen carbonate | None | - | 0 | 3.0 | 3.0 | 94 | ○ | ○ | ○ |
| | | | | 0 | 2.0 | 2.0 | 118 | ○ | ○ | ○ |
| | | | | 0 | 1.0 | 1.0 | 125 | ○ | × | ○ |

### (Example 18)

Three types of sheet members were prepared as in Example 11 except that, as the inorganic filler, magnesium sulfate was used, to provide battery cover sheets in Example 18: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 3.

### (Example 19)

Three types of sheet members were prepared as in Example 11 except that, as the inorganic filler, a mixture of aluminum hydroxide and sodium hydrogen carbonate mixed in 1:1 was used, to provide battery cover sheets in Example 19: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 3.

### (Example 20)

Three types of sheet members were prepared as in Example 11 except that, as the inorganic filler, a mixture of magnesium hydroxide and sodium hydrogen carbonate mixed in 1:1 was used, to provide battery cover sheets in Example 20: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 3.

### (Comparative Example 3)

Three types of sheet members were prepared as in Example 11 except that no inorganic filler was contained (specifically, the inorganic filler was not added and the urethane resin alone was used), to provide battery cover sheets in Comparative Example 3: a sheet member having a thickness of 3.0 mm and a Vf of 5%, a sheet member having a thickness of 2.0 mm and a Vf of 5%, and a sheet member having a thickness of 1.0 mm and a Vf of 8%. These battery cover sheets were subjected to the above-described thermal-runaway-propagation prevention test. The results will be described in Table 3.

### (Comparative Example 4)

Three types of sheet members were prepared as in Example 11 except that the polyester nonwoven fabric or glass fiber serving as the fibrous substrate was not used, and the urethane resin alone without containing the inorganic filler was used, to provide battery cover sheets in Comparative Example 4: sheet members having a thickness of 3.0 mm, 2.0 mm, or 1.0 mm. These battery cover sheets were subjected to the above-described thermal-runaway-propagation prevention test. The results will be described in Table 3.

**[Table 3]**

| | Inorganic filler of urethane resin composition | Fibrous substrate | | Fiber volume fraction Vf [%] | Battery intervals [mm] | Thickness [mm] | Temperature of adjacent battery [°C] | Thermal-runaway-propagation evaluation | Post-test evaluation | |
|---|---|---|---|---|---|---|---|---|---|---|
| | | Material | Number of substrates | | | | | | Breakage | Melting |
| Example 18 | Magnesium sulfate | Polyester | 4 | 5 | 3.0 | 3.0 | 94 | ○ | ○ | ○ |
| | | | 3 | 5 | 2.0 | 2.0 | 120 | ○ | ○ | ○ |
| | | | 2 | 8 | 1.0 | 1.0 | 131 | ○ | ○ | ○ |
| Example 19 | Aluminum hydroxide: Sodium hydrogen carbonate = 1:1 | Polyester | 4 | 5 | 3.0 | 3.0 | 105 | ○ | ○ | ○ |
| | | | 3 | 5 | 2.0 | 2.0 | 121 | ○ | ○ | ○ |
| | | | 2 | 8 | 1.0 | 1.0 | 122 | ○ | ○ | |
| Example 20 | Magnesium hydroxide: Sodium hydrogen carbonate = 1:1 | Polyester | 4 | 5 | 3.0 | 3.0 | 109 | ○ | ○ | ○ |
| | | | 3 | 5 | 2.0 | 2.0 | 127 | ○ | ○ | ○ |
| | | | 2 | 8 | 1.0 | 1.0 | 130 | ○ | ○ | ○ |
| Comparative Example 3 | (Not contained) | Polyester | 4 | 5 | 3.0 | 3.0 | 500°C or higher | × | × | × |
| | | | 3 | 5 | 2.0 | 2.0 | 500°C or higher | × | × | × |
| | | | 2 | 8 | 1.0 | 1.0 | 500°C or higher | × | × | × |
| Comparative Example 4 | (Not contained) | None | - | 0 | 3.0 | 3.0 | 500°C or higher | × | × | × |
| | | | | 0 | 2.0 | 2.0 | 500°C or higher | × | × | × |
| | | | | 0 | 1.0 | 1.0 | 500°C or higher | × | × | × |

### (Comparison among Examples and Comparative Examples)

The results of Examples 1 to 20 have demonstrated that the battery cover sheets according to these Examples prevent thermal runaway propagation even in the thermal-runaway-propagation prevention tests, and achieve high flame retardancy and high heat dissipation. In addition, even after the thermal-runaway-propagation tests, the battery cover sheets substantially do not melt-flow, and the battery cover sheets almost do not break (breakage occurred only in cases where the fibrous substrate was not contained and the thickness was small). Thus, it has been demonstrated that the battery cover sheets according to these Examples have high stability. It has also been demonstrated that battery cover sheets that contain a fibrous substrate, regardless of whether it is polyester nonwoven fabric or glass fiber, have high flame retardancy, high heat dissipation, and high stability.

In addition, in Examples 1 to 10 using cylindrical lithium-ion batteries and also in Examples 11 to 20 using laminate lithium-ion batteries, the battery cover sheets according to these Examples each achieve high flame retardancy, high heat dissipation, and high stability. This has demonstrated that the battery cover sheets according to these Examples are suitably applicable to batteries of various types.

By contrast, the battery cover sheets according to Comparative Example 1 and Comparative Example 3, which used the urethane resin not containing any inorganic filler, did not achieve high flame retardancy or high heat dissipation. In addition, after the thermal-runaway-propagation tests, the battery cover sheets did not break but melt-flowed, so that high stability was also not achieved.

Similarly, the battery cover sheets according to Comparative Example 2 and Comparative Example 4, which used the urethane resin not containing any inorganic filler and also did not use fibrous substrates of inorganic fibers or organic resin fibers, did not achieve high flame retardancy or high heat dissipation. In addition, after the thermal-runaway-propagation tests, the battery cover sheets broke and melt-flowed, so that high stability was also not achieved. Incidentally, in each of the battery cover sheets of Comparative Examples 1 to 4, in the thermal-runaway-propagation prevention test, thermal runaway propagation occurred not only from the heat-source battery to the adjacent battery, but also to the remaining batteries.

Note that the present invention is not limited to the above descriptions of Embodiments; the present invention is set out in the appended claims.

### Industrial Applicability

The present invention is widely and suitably applicable to the field of battery packs irrespective of, for example, the shape or type of batteries.

### Reference Signs List

10: battery cover sheet (sheet member)
10a: seam
11: adhesive tape (fixing member)
12: adhesive (fixing member)
20A: cylindrical lithium-ion battery (battery)
20B: laminate lithium-ion battery (battery)
20C: prismatic lithium-ion battery (battery)
21: terminal cap
22: sealing part
23: electrode group
24: outer packaging part
30A to 30C: sheet-covered batteries
31A, 31B, 32: battery pack units
32: dead space

## Claims

1. A sheet-covered battery in which an outer surface of a battery is at least partially covered with a battery cover sheet being a sheet member formed of a resin composition containing urethane resin as a resin component and an inorganic filler, and having a storage modulus at 25°C in a range of 0.1 to 50 MPa so as to have flexibility enough to cover, along a shape of an outer surface of a battery, at least partially the outer surface,
wherein the resin composition contains, relative to 100 mass% of a total amount of the resin composition, the inorganic filler in a range of 30 to 95 mass%,
wherein the inorganic filler is at least one selected from the group consisting of divalent or trivalent metal hydroxide, divalent metal sulfate hydrate, zinc salt of oxoacid, silica, alumina, dawsonite, and sodium hydrogen carbonate, and
wherein the sheet member has a thickness in a range of 0.5 to 3.0 mm.

2. The sheet-covered battery according to Claim 1, wherein the sheet member further comprises a fibrous substrate.

3. The sheet-covered battery according to Claim 2, wherein a fiber forming the fibrous substrate is at least one fiber selected from the group consisting of glass fiber, polyester fiber, carbon fiber, boron fiber, aramid fiber, nylon fiber, polyethylene fiber, polyarylate fiber, BPO fiber, polyphenylene sulfide fiber, polyimide fiber, and fluorofiber.

4. The sheet-covered battery according to Claim 2 or 3, wherein the fibrous substrate is formed of braid, woven fabric, knitted fabric, nonwoven fabric, monofilaments, or rovings.

5. The sheet-covered battery according to any one of Claims 2 to 4, wherein the sheet member has a fiber volume fraction Vf, as determined in accordance with JIS K7075, in a range of 0.5 to 50%.

6. A battery pack comprising a structure in which outer surfaces of a plurality of batteries are at least partially covered with a single battery cover sheet as specified by any one of Claims 1 to 5 or comprising a structure in which a plurality of sheet-covered batteries according to any one of Claims 1 to 5 are combined together.

7. The battery pack according to Claim 6, wherein the battery cover sheet is fixed so as to cover, of the outer surface of the battery except for end surfaces, a whole peripheral surface.

## Patentansprüche

1. Folienbedeckte Batterie, bei der eine Außenfläche einer Batterie zumindest teilweise mit einer Batterieabdeckfolie bedeckt ist, die ein Folienelement ist, das aus einer Harzzusammensetzung gebildet ist, die Urethanharz als Harzkomponente und einen anorganischen Füllstoff enthält und die einen Speichermodul bei 25 °C in einem Bereich von 0,1 bis 50 MPa aufweist, um so ausreichende Flexibilität aufzuweisen, um entlang einer Form einer Außenfläche einer Batterie zumindest teilweise die Außenfläche zu bedecken,
wobei die Harzzusammensetzung, bezogen auf 100 Massen-% der Gesamtmenge der Harzzusammensetzung, den anorganischen Füllstoff in einem Bereich von 30 bis 95 Massen-% enthält,
wobei der anorganische Füllstoff mindestens einer aus der Gruppe bestehend aus zweiwertigem oder dreiwertigem Metallhydroxid, zweiwertigem Metallsulfathydrat, Zinksalz einer Oxosäure, Siliciumdioxid, Aluminiumoxid, Dawsonit und Natriumhydrogencarbonat ist, und
wobei das Folienelement eine Dicke im Bereich von 0,5 bis 3,0 mm aufweist.

2. Folienbedeckte Batterie gemäß Anspruch 1, wobei das Folienelement ferner ein faseriges Substrat umfasst.

3. Folienbedeckte Batterie nach Anspruch 2, wobei eine Faser, die das faserige Substrat bildet, mindestens eine Faser ist, die aus der Gruppe ausgewählt ist, die aus Glasfaser, Polyesterfaser, Kohlenstofffaser, Borfaser, Aramidfaser, Nylonfaser, Polyethylenfaser, Polyarylatfaser, BPO-Faser, Polyphenylensulfidfaser, Polyimidfaser und Fluorfaser besteht.

4. Folienbedeckte Batterie gemäß Anspruch 2 oder 3, wobei das faserige Substrat aus einem Geflecht, einem Gewebe, einem Gestrick, einem Vliesstoff, Monofilamenten oder Rovings gebildet ist.

5. Folienbedeckte Batterie gemäß einem der Ansprüche 2 bis 4, wobei das Folienelement einen gemäß JIS K7075 bestimmten Faseranteil Vf in einem Bereich von 0,5 bis 50 % aufweist.

6. Batteriepack, umfassend eine Struktur, bei der die Außenflächen einer Vielzahl von Batterien zumindest teilweise mit einer einzigen Batterieabdeckfolie gemäß einem der Ansprüche 1 bis 5 abgedeckt sind, oder umfassend eine Struktur, bei der eine Vielzahl von folienbedeckten Batterien gemäß einem der Ansprüche 1 bis 5 miteinander kombiniert sind.

7. Batteriepack gemäß Anspruch 6, wobei die Batterieabdeckfolie befestigt ist, um eine gesamte Umfangsfläche der Außenfläche der Batterie mit Ausnahme der Endflächen zu bedecken.

## Revendications

1. Batterie recouverte d'une feuille dans laquelle la surface extérieure d'une batterie est au moins partiellement recouverte d'une feuille de recouvrement de batterie qui est un élément en feuille formé d'une composition de résine contenant une résine uréthane comme composant de résine et une charge inorganique, et ayant un module de stockage à 25 °C compris entre 0,1 et 50 MPa afin d'avoir une flexibilité suffisante pour recouvrir, le long de la forme d'une surface extérieure d'une batterie, au moins partiellement la surface extérieure,
dans laquelle la composition de résine contient, par rapport à 100 % en masse de la quantité totale de la composition de résine, la charge inorganique comprise entre 30 et 95 % en masse,
dans laquelle la charge inorganique est au moins une charge choisie dans le groupe constitué par un hydroxyde métallique divalent ou trivalent, un sulfate métallique divalent hydraté, un sel de zinc d'un oxoacide, de la silice, de l'alumine, de la dawsonite et de l'hydrogénocarbonate de sodium, et
dans laquelle l'élément en feuille a une épaisseur comprise entre 0,5 et 3,0 mm.

2. Batterie recouverte d'une feuille selon la revendication 1, dans laquelle l'élément en feuille comprend en outre un substrat fibreux.

3. Batterie recouverte d'une feuille selon la revendication 2, dans laquelle une fibre formant le substrat fibreux est au moins une fibre choisie dans le groupe constitué par la fibre de verre, la fibre de polyester, la fibre de carbone, la fibre de bore, la fibre d'aramide, la fibre de nylon, la fibre de polyéthylène, la fibre de polyarylate, la fibre de BPO, la fibre de polyphénylène sulfure, la fibre de polyimide et la fibre fluorée.

4. Batterie recouverte d'une feuille selon la revendication 2 ou 3, dans laquelle le substrat fibreux est formé d'une tresse, d'un tissu tissé, d'un tissu tricoté, d'un tissu non tissé, de monofilaments ou de mèches.

5. Batterie recouverte d'une feuille selon l'une quelconque des revendications 2 à 4, dans laquelle l'élément en feuille a une fraction volumique de fibres Vf, déterminée conformément à la norme JIS K7075, comprise entre 0,5 et 50 %.

6. Bloc-batterie comprenant une structure dans laquelle des surfaces extérieures d'une pluralité de batteries sont au moins partiellement recouvertes d'une seule feuille de recouvrement de batterie telle que spécifiée par l'une quelconque des revendications 1 à 5, ou comprenant une structure dans laquelle une pluralité de batteries recouvertes d'une feuille selon l'une quelconque des revendications 1 à 5 sont combinées ensemble.

7. Bloc-batterie selon la revendication 6, dans lequel la feuille de recouvrement de batterie est fixée de manière à recouvrir toute la surface périphérique de la surface extérieure de la batterie, à l'exception de surfaces d'extrémité.
